Europäisches Patentamt

European Patent Office

Office européen des brevets

(19)

(11) Numéro de publication : **0 418 952 B1**

(12) **FASCICULE DE BREVET EUROPEEN**

(45) Date de publication du fascicule du brevet :
**06.12.95 Bulletin 95/49**

(51) Int. Cl.[6] : **H04N 7/24,** H04N 7/32,
H04N 5/92

(21) Numéro de dépôt : **90202394.4**

(22) Date de dépôt : **10.09.90**

(54) **Dispositif de codage d'informations bidimensionnelles et dispositif de décodage correspondant.**

(30) Priorité : **15.09.89 FR 8912115**
**15.09.89 FR 8912116**
**15.09.89 FR 8912117**

(43) Date de publication de la demande :
**27.03.91 Bulletin 91/13**

(45) Mention de la délivrance du brevet :
**06.12.95 Bulletin 95/49**

(84) Etats contractants désignés :
**DE FR GB**

(56) Documents cités :
**US-A- 4 668 986**
**US-A- 4 698 672**
**US-A- 4 707 738**
**US-A- 4 727 422**
**FREQUENZ, vol. 43, no. 3, mars 1989, pages
70-78; H. AMOR et al.: "Ein Lösungsweg zur
Übertragung von Bewegtbildern im Schmal-
band-ISDN"**
**IEEE / IEICE GLOBAL TELECOMMUNICA-
TIONS CONFERENCE RECORD, vol. 1 de 3,
IEEE Catalogue no. 87CH2520-5, 15-18 novembre 1987, pages 36-39, Tokyo, JP; S. OKUBO et
al.: "Progress of CCITT standardization on
NX384 KBIT/S video codec"**

(56) Documents cités :
**IEEE TRANSACTIONS ON COMMUNICA-
TIONS, vol. COM-29, no. 12, décembre 1981,
pages 1799-1808, IEEE, New York, US; R.
JASWANT et al.: "Displacement measurement and its application in interframe image
coding"**

(73) Titulaire : **LABORATOIRES D'ELECTRONIQUE
PHILIPS
22, avenue Descartes,
BP 15
F-94453 Limeil-Brévannes Cédex (FR)**
(84) **FR**
Titulaire : **Philips Electronics N.V.
Groenewoudseweg 1
NL-5621 BA Eindhoven (NL)**
(84) **DE GB**

(72) Inventeur : **Denoyelle, Pascal
Société Civile S.P.I.D.,
156 Boulevard Haussmann
F-75008 Paris (FR)**
Inventeur : **Haghiri, Mohammad-Rèza
Société Civile S.P.I.D.,
156 Boulevard Haussmann
F-75008 Paris (FR)**

(74) Mandataire : **Landousy, Christian et al
Société Civile S.P.I.D.
156, Boulevard Haussmann
F-75008 Paris (FR)**

Jouve, 18, rue Saint-Denis, 75001 PARIS

EP 0 418 952 B1

## Description

La présente invention concerne un dispositif de codage de signaux d'entrée représentatifs d'images dites d'origine ($I_1$, $I_2$, $I_3$, $I_4$, $I_5$,...) organisées en une séquence où elles sont repérées par leur rang, ou parité, apparaissant en indice, ledit dispositif comprenant :

(a) un étage de codage à longueur variable ;

(b) un étage de reconstruction connecté en dérivation dans l'étage de codage et prévu pour exécuter, sur les signaux présents à son point de raccordement avec ledit étage de codage, les opérations inverses de celles déjà exécutées, en ce point de raccordement, par ledit étage de codage sur les signaux d'entrée de cet étage de codage ;

(c) un étage d'estimation de mouvement par blocs délimités à l'intérieur desdites images ;

(d) un étage de prédiction à partir des signaux de sortie desdits étages de reconstruction et d'estimation de mouvement.

L'invention concerne également un dispositif de décodage de signaux préalablement transmis et/ou stockés après réduction de débit, lesdits signaux, représentatifs d'images dites d'origine ($I_1$, $I_2$, $I_3$, $I_4$, $I_5$,...) organisées en une séquence où elles sont repérées par leur rang, ou parité, apparaissant en indice, ayant été, avant la transmission et/ou le stockage, codés dans un dispositif de codage comprenant :

(a) un étage de codage à longueur variable ;

(b) un étage de reconstruction connecté en parallèle dans l'étage de codage et prévu pour exécuter, sur les signaux présents à son point de raccordement avec ledit étage de codage, les opérations inverses de celles déjà exécutées, en ce point de raccordement, par ledit étage de codage sur les signaux d'entrée de cet étage de codage ;

(c) un étage d'estimation de mouvement par blocs délimités à l'intérieur desdites images, prévu pour déterminer, à partir, d'une part, de signaux d'entrée ($I_1$, $I_3$, $I_5$, $I_7$,...) d'une parité déterminée dans ladite séquence, destinés à être transmis, et d'autre part d'informations de mouvement (D), dites premières, relatives au mouvement entre ces signaux d'entrée et représentatives, dans ladite séquence des signaux d'entrée complémentaires ($I_2$, $I_4$, $I_6$, $I_8$,...) de parité opposée, non destinés à être transmis et auxquels elles se substituent, des informations de mouvement (D'), dites deuxièmes mais représentatives cette fois, dans ladite séquence, du mouvement intervenu entre signaux d'entrée successifs ($I_1$ et $I_3$ ; $I_3$ et $I_5$ ; $I_5$ et $I_7$, etc,...) de même parité dite déterminée, dits respectivement signaux d'entrée postérieurs ($I_3$, $I_5$, $I_7$,...) et antérieurs ($I_1$, $I_3$, $I_5$,...), lesdites deuxièmes informations (D') étant destinées audit étage de prédiction ;

(d) un étage de prédiction à partir des signaux de sortie desdits étages de reconstruction et d'estimation de mouvement ;

(e) un étage de sélection, à partir d'une part des signaux d'entrée du dispositif de codage et d'autre part des signaux de sortie dudit étage de prédiction, des signaux à coder dans ledit étage de codage ;

ledit dispositif de décodage comprenant un étage de décodage qui comprend lui-même en série une mémoire-tampon, un circuit de décodage, et un circuit de quantification et transformation orthogonale inverses des signaux décodés recevant également des signaux C et N préalablement transmis et/ou stockés et constituant respectivement une information de classification des blocs selon leur contenu et une information de normalisation.

Cette invention trouve une application particulièrement intéressante dans le cas où lesdites informations bidimensionnelles sont représentatives d'images animées et où un disque compact est utilisé comme support de ces informations.

La transmission et/ou le stockage d'une très grande quantité d'informations, associée par exemple à des images, impliquent en général d'opérer une compression des signaux à transmettre et/ou stocker, c'est-à-dire une réduction, dans un rapport à déterminer, de leur nombre. Le rapport de réduction est déterminée entre autres par le fait qu'on doit conserver une quantité suffisante de signaux pour ne pas trop dégrader l'information globale qu'ils portent, par exemple (dans le cadre de l'application citée) par le fait qu'on doit conserver une qualité d'image acceptable.

La plupart des procédés de codage connus actuellement pour réaliser cette réduction de débit reposent sur des transformations orthogonales, du type transformation en cosinus discret, qui autorisent une réduction de débit dans un rapport de l'ordre de 10 à 1. Un exemple de telles transformations est décrit dans le brevet des Etats-Unis d'Amérique US-A-4394774. Cependant, pour un bon nombre d'applications, et par exemple dans l'application au stockage et traitement d'images sur disque compact, ce rapport n'est pas suffisant.

Une précédente demande de brevet européen EP-A-0404238 déposée par la société demanderesse, décrit un dispositif de traitement de signaux qui permet de réaliser un traitement de réduction complémentaire dans un rapport de 2 à 1. Ce dispositif est prévu pour être d'une façon générale inclus dans un système de transmission et/ou de stockage de signaux regroupés par lots périodiques tels que des images, ledit système

EP 0 418 952 B1

comprenant d'une part un étage d'émission et d'autre part, après transmission et/ou stockage des signaux émis sur un support à bande passante limitée rendant nécessaire ledit traitement de réduction de débit, un étage de réception et/ou de lecture des signaux transmis et/ou stockés. Le dispositif de traitement concerné comprend lui-même, essentiellement, les sous-ensembles suivants :

(a) un sous-ensemble de sous-échantillonnage temporel dans un rapport déterminé, prévu pour délivrer, selon un premier mode, dit compensé, de transmission et/ou de stockage, une première séquence de signaux à transmettre et/ou stocker de fréquence plus faible que celle des lots de signaux d'origine ;

(b) un sous-ensemble d'estimation du mouvement entre blocs appartenant à des lots périodiques successifs, prévu pour délivrer, par bloc, une information de mouvement à transmettre et/ou stocker en remplacement de ceux des blocs éliminés par ledit sous-échantillonnage temporel ;

(c) un sous-ensemble de reconstitution avec compensation de mouvement, prévu pour délivrer, à partir d'une part de ceux des blocs qui, dans les signaux d'origine, donnent lieu à la transmission et/ou le stockage selon le mode compensé et d'autre part des informations de mouvement associées auxdits blocs en remplacement des blocs éliminés, les blocs de signaux tels qu'ils seront reconstruits à la réception en remplacement des blocs éliminés et à partir des séquences de signaux et informations de mouvement transmises ;

(d) un sous-ensemble de prise de décision, prévu pour délivrer par bloc, à partir d'une comparaison impliquant d'une part les signaux d'origine et d'autre part lesdits signaux reconstruits après compensation de mouvement, une information relative au choix ou non dudit mode compensé selon le résultat de cette comparaison ;

(e) un sous-ensemble de traitement de repli, prévu pour adjoindre, par bloc, à ladite première séquence de signaux, selon un deuxième mode, dit de repli, de transmission et/ou de stockage de substituant, en fonction de résultat de la comparaison, au premier mode compensé, au moins une deuxième séquence de signaux synchrone de la première.

Dans un des réalisations décrites dans ladite demande, le sous-ensemble de sous-échantillonnage temporel opère dans un rapport 1/2 et est un commutateur commandé à une fréquence égale à la moitié de la fréquence de répétition des signaux d'entrée (images) du dispositif de traitement de signaux ; et il élimine donc une image sur deux dans la suite des signaux d'images, par exemple les images paires. Le sous-ensemble d'estimation de mouvement agit alors sur trois images successives, $I_1$, $I_2$, $I_3$ par exemple, pour rechercher la direction du mouvement de l'une à l'autre d'entre elles et permettre ultérieurement la reconstruction des images non transmises. Comme les signaux sont en général traités par blocs, le sous-ensemble d'estimation de mouvement, plus précisément, recherche pour chacun de ces blocs la direction du mouvement, afin d'en déduire ultérieurement (à la réception et/ou à la lecture des signaux transmis et/ou stockés) une approximation des différents blocs composant les images non transmises, à partir, d'une part, de l'information de mouvement ainsi obtenue et, d'autre part, du contenu des deux images transmises adjacentes à une image éliminée.

Le sous-ensemble d'estimation de mouvement utilisé comprend par exemple deux mémoires d'image et un corrélateur par blocs (tels que ceux décrits par exemple de l'article de J.R. Jain et A.K. Jain, "Displacement measurement and its application in interframe image coding", IEEE Transactions on Communications, vol.COM-29, n°12, déc. 1981, pages 1799 à 1808). L'estimation de mouvement par corrélation ainsi proposée a pour effet de déterminer pour chaque bloc des images éliminées ($I_2$, $I_4$ par exemple, dans une suite d'images $I_1$, $I_2$, $I_3$, $I_4$, $I_5$, etc...) un vecteur de déplacement D tel que l'on puisse déduire de cette connaissance de D une approximation $\hat{I}_2$, $\hat{I}_4$, etc... de l'image éliminée à partir de la demi-somme des images non éliminées qui l'entourent, selon une relation du type suivant, dans le cas de $I_2$ à reconstituer entre $I_1$ et $I_3$ :

$$\hat{I}_2(X) = (1/2)(I_1(X - D) + I_3(X + D))$$

où X est l'indice spatial du point d'image (ou "pixel") courant, $I_1$, $I_2$, $I_3$ les images d'origine, D le déplacement (en points d'image), et $\hat{I}_2$ l'approximation recherchée de l'intensité du point X du bloc courant de l'image éliminée.

Exprimée en d'autres termes, cette estimation de mouvement revient à rechercher pour chaque bloc, représenté par un point courant d'indice spatial X, un vecteur D tel que l'expression :

$\Sigma$ $(DFD(X,D))^2$ pour la totalité des blocs soit minimale. Dans ladite expression, DFD, qui provient des termes anglais correspondants, "Displaced Frame Difference", est l'erreur d'approximation attachée au bloc courant et équivalente, pour ce bloc, à la somme des carrés des erreurs d'approximation sur tous les points du bloc. Cette erreur d'approximation a donc pour expression :

$$\Sigma (I_2(X) - (1/2)(I_3(X + D) + I_1(X - D)))^2,$$

(blocs)

et c'est cette expression dont la valeur minimale est recherchée. Le vecteur de déplacement sélectionné est celui qui est associé à cette valeur minimale, après un test exhaustif de tous les vecteurs de déplacement possibles dans une plage de recherche délimitée par des valeurs horizontale et verticale $D_x$ et $D_y$ respective-

3

ment.

Dans le dispositif de traitement décrit, le mode de fonctionnement normal est celui de l'estimation de mouvement par blocs, qui permet une compensation de mouvement ultérieure et qu'on appelle de ce fait mode compensé (en anglais, "compensated mode"). Cependant, le sous-ensemble d'estimation de mouvement peut être défaillant (bruit trop important, mouvement trop rapide faisant sortir ce circuit de sa plage de fonctionnement, objets aux mouvements contradictoires, etc...), et, dans de telles situations, le sous-ensemble de traitement de repli entre en fonctionnement : le mode de fonctionnement normal est remplacé, dans ce cas, par un mode non compensé appelé mode de repli (en anglais, "fall-back mode").

Ce sous-ensemble de traitement de repli comprend, dans l'exemple décrit, deux variantes de réalisation, l'une sans sous-échantillonnage spatial et l'autre avec un tel sous-échantillonnage. Dans la première variante, ledit sous-ensemble de traitement de repli comprend un circuit de retard égal à la période des signaux d'origine, suivi d'un circuit de sous-échantillonnage temporel dans le même rapport que celui du sous-ensemble de sous-échantillonnage temporel. Dans la deuxième variante, le sous-ensemble de traitement de repli comprend en outre un sous-ensemble de sous-échantillonnage spatial comprenant lui-même, en parallèle, une première et une deuxième voie de sous-échantillonnage spatial dans ledit rapport déterminé, la maille de sous-échantillonnage spatial étant indépendante du mouvement et fixe à la résolution temporelle des signaux près.

Dans la réalisation conforme à cette deuxième variante, la structure du sous-ensemble de traitement de repli est, en agençant ses circuits différemment, équivalente à celle d'un sous-ensemble de traitement de repli qui comprend, en parallèle sur ledit sous-ensemble de sous-échantillonnage temporel, un sous-ensemble de sous-échantillonnage spatial comprenant lui-même deux voies en parallèle dont la première comprend un premier circuit de sous-échantillonnage spatial et dont la seconde comprend en série un circuit à retard d'une période des signaux d'origine et un second circuit de sous-échantillonnage spatial, la maille de sous-échantillonnage spatial étant indépendante du mouvement et fixe à la résolution temporelle des signaux près, et lesdites deux voies en parallèle étant précédées d'un circuit de filtrage spatial et suivies d'un aiguilleur prévu pour sélectionner, à une fréquence deux fois plus faible que celle des signaux d'origine, alternativement l'une ou l'autre des sorties des circuits de sous-échantillonnage spatial, de façon à délivrer, à partir des échantillons de deux images successives et à la fréquence moitié de celle des signaux d'entrée, une image complète, obtenue par mélange de deux images préalablement filtrées.

Le critère de défaillance du sous-ensemble d'estimation de mouvement est contrôlé par un circuit de décision qui détermine, dans des voies en parallèle, ce que seraient d'une part l'erreur d'interpolation compensée en mouvement, par bloc, dans le cas d'une fonctionnement en mode compensé, et d'autre part, de façon similaire, l'erreur en mode de repli. A la suite de ces calculs en parallèle, une comparaison des deux résultats conduit à sélectionner le résultat le plus faible et à délivrer pour chaque bloc d'image une information de mode correspondante (indiquant que ce bloc va être transmis et/ou stocké en mode compensé, ou au contraire en mode de repli, sans élimination d'une image sur deux dans ce dernier cas).

Le dispositif de traitement de signaux décrit dans la demande citée, dont on vient de rappeler les caractéristiques essentielles à l'aide d'une description de sa structure et de sa mise en oeuvre, permet donc de remédier aux insuffisances constatées, en matière de réduction de débit, avec la plupart des dispositifs de codage de signaux connus actuellement.

Cependant, en combinant le principe de ces dispositifs, tels que par exemple celui décrit dans le document "Coding television signals..." de G. Kummerfeldt, F. May et W.Wolf, AEG Forschungsinstitut Ulm, SPIE, Vol.594, Image Coding, 1985, et notamment sur la figure 2 de ce document, désormais traditionnels et celui dudit dispositif ainsi décrit dans la demande citée, il apparaît que des simplifications du traitement des signaux, associées à de nouvelles possibilités de réduction de débit, peuvent être mises en place.

Un but de l'invention est de proposer un dispositif de codage de signaux autorisant de façon simple et économique une réduction de la quantité d'informations à transmettre plus importante que dans le cas des réalisations antérieures.

A cet effet l'invention concerne un dispositif de codage tel que défini dans le préambule et caractérisé en ce que :

(A) l'étage d'estimation de mouvement comprend des moyens prévus pour déterminer, à partir, d'une part, de signaux d'entrée ($I_1$, $I_3$, $I_5$, $I_7$,...) d'une parité déterminée dans ladite séquence, destinés à être transmis, et d'autre part d'informations de mouvement (D), dites premières, relatives au mouvement entre ces signaux d'entrée et représentatives, dans ladite séquence des signaux d'entrée complémentaires ($I_2$, $I_4$, $I_6$, $I_8$,...), de parité opposée, non destinés à être transmis et auxquels elles se substituent, des informations de mouvement (D'), dites deuxièmes mais représentatives cette fois, dans ladite séquence, du mouvement intervenu entre signaux d'entrée successifs ($I_1$ et $I_3$ ; $I_3$ et $I_5$ ; $I_5$ et $I_7$, etc...), de même parité dite déterminée, dits respectivement signaux d'entrée postérieurs ($I_3$, $I_5$, $I_7$,...) et antérieurs ($I_1$, $I_3$, $I_5$,...), lesdites deuxièmes informations (D') étant destinées audit étage de prédiction ;

(B) l'étage de prédiction est suivi d'un étage de sélection, à partir d'une part des signaux d'entrée du dispositif et d'autre part des signaux de sortie dudit étage de prédiction, des signaux à coder dans ledit étage de codage ;

(C) l'étage de reconstruction comprend une voie de traitement additionnel lorsque les signaux d'entrée du dispositif sont accompagnés d'informations additionnelles.

Les estimateurs de mouvement de type classique présentent un temps de calcul assez long. Grâce à la structure ici proposée, on obtient une simplification du traitement des signaux en tirant parti du fait qu'une estimation de mouvement concernant les signaux d'entrée du présent dispositif de codage a déjà été réalisée, et que, de cette estimation de mouvement peuvent être déduites, conformément à l'invention, de nouvelles informations de mouvement permettant de modifier les conditions du traitement de codage dans le sens souhaité d'une réduction du temps de calcul et également du débit.

Dans un mode de réalisation à la fois simple et avantageux, l'étage d'estimation de mouvement comprend un premier sous-ensemble de détermination d'un vecteur intermédiaire à partir desdites premières informations de mouvement et un deuxième sous-ensemble de correction de la valeur de ce vecteur intermédiaire, délivrant lesdites deuxièmes informations de mouvement. Ces premier et deuxième sous-ensembles peuvent par exemple comprendre chacun en série un circuit d'adressage, un soustracteur, un élévateur au carré, un sommateur et un comparateur.

Dans un autre mode de réalisation de l'invention, le dispositif de codage est caractérisé en ce que :

(A) ses signaux d'entrée sont fournis à l'étage de sélection par l'intermédiaire d'un étage de filtrage spatial ;

(B) l'étage d'estimation est prévu pour délivrer des deuxièmes informations relatives au mouvement, d'une part entre les signaux d'entrée de parité déterminée et les signaux d'entrée de parité opposée qui les suivent, et d'autre part entre signaux d'entrée de parité déterminée successifs.

Dans le cas de cette réalisation, le dispositif de codage est de préférence caractérisé en ce que ledit étage d'estimation de mouvement comprend un sous-ensemble de détermination de vecteur, comprenant lui-même en série un circuit d'adressage qui reçoit sur une première entrée lesdits signaux précédemment traités et sur une deuxième entrée lesdites premières informations de mouvement, un soustracteur, un élévateur au carré, un sommateur, et un comparateur, et en ce que :

(a) pour la détermination des deuxièmes informations relatives au mouvement entre les signaux de parité déterminée et les signaux de parité opposée qui les suivent, le soustracteur reçoit sur sa deuxième entrée non reliée au circuit d'adressage lesdits signaux de parité opposée ;

(b) pour la détermination des deuxièmes informations relatives au mouvement entre signaux de parité déterminée successifs, un multiplicateur par deux précède en série la deuxième entrée dudit circuit d'adressage, et le soustracteur reçoit sur sa deuxième entrée non reliée audit circuit d'adressage les signaux de parité déterminée.

Un autre but de l'invention est, réciproquement, de proposer un dispositif de décodage apte à assurer de façon correcte le décodage de signaux codés selon l'un ou l'autre des modes de réalisation du dispositif de codage selon l'invention.

L'invention concerne à cet effet un dispositif de décodage tel que défini dans le préambule et caractérisé en ce qu'il comprend également :

(1) un circuit de reconstruction d'images à partir des signaux de sortie dudit circuit de quantification et transformation orthogonale inverses et d'informations de prédiction déterminées au cours d'un précédent cycle de reconstruction ;

(2) un circuit de traitement destiné à restituer des images selon une disposition similaire à l'agencement des images d'origine ;

(3) un circuit de prédiction, destiné à délivrer lesdites informations de prédiction à partir d'une part d'informations liées au contenu desdites images reconstruites et d'autre part desdites deuxièmes informations de mouvement.

Selon une première réalisation, ce dispositif de décodage est caractérisé en ce que lesdits signaux représentatifs sont les signaux de luminance d'une séquence d'images de télévision, en ce que ledit circuit de traitement est un étage de sous-échantillonnage et d'interpolation, avec ou sans compensation de mouvement selon lesdites premières informations de mouvement et selon des informations de modes de fonctionnement préalablement déterminées en fonction du contenu desdites images initiales, et en ce que cet étage de sous-échantillonnage et d'interpolation est inséré entre la sortie du circuit de reconstruction et l'entrée d'un circuit de mémorisation.

Selon une autre réalisation, ce dispositif de décodage est caractérisé en ce que lesdits signaux représentatifs sont les signaux de chrominance d'une séquence d'images de télévision, en ce que ledit circuit de traitement est un circuit de réinterpolation des signaux de différence de couleur de ces signaux de chrominance, et en ce qu'un interrupteur d'élimination d'une image reconstruite sur deux est inséré entre la sortie du circuit de reconstruction et l'entrée d'un circuit de mémorisation.

Les particularités et avantages de l'invention apparaîtront maintenant de façon plus précise dans la description qui suit et dans les dessins annexés, donnés à titre d'exemples non limitatifs et dans lesquels :

- la figure 1 montre un premier exemple de réalisation du dispositif de codage selon l'invention ;
- la figure 2a illustre pour un bloc d'image le principe d'interpolation avec compensation de mouvement ;
- la figure 2b montre un exemple d'association d'un voisinage de blocs, dans une image non transmise, à un bloc de l'image suivante transmise ;
- la figure 2c illustre le principe de détermination approchée des nouvelles informations de mouvement ;
- la figure 3 montre un exemple de réalisation de l'étage d'estimation de mouvement délivrant ces nouvelles informations de mouvement ;
- la figure 4 illustre le principe de correction des informations de mouvement obtenues à la suite de ladite détermination approchée ;
- les figures 5 et 6 montrent deux autres modes de réalisation du dispositif de codage selon l'invention ;
- la figure 7 montre un autre exemple de réalisation de dispositif de codage selon l'invention ;
- la figure 8 illustre, dans le cas des signaux U, le traitement de sous-échantillonnage spatial effectué sur les signaux U et V de différence de couleur constituant une composante de chrominance ;
- la figure 9 montre un exemple de réalisation de l'étage d'estimation de mouvement du dispositif de codage de la figure 7 ;
- les figures 10 et 11 montrent deux exemples de réalisation d'un dispositif de décodage selon l'invention, correspondant respectivement au dispositif de codage de la figure 6 et à celui de la figure 7.

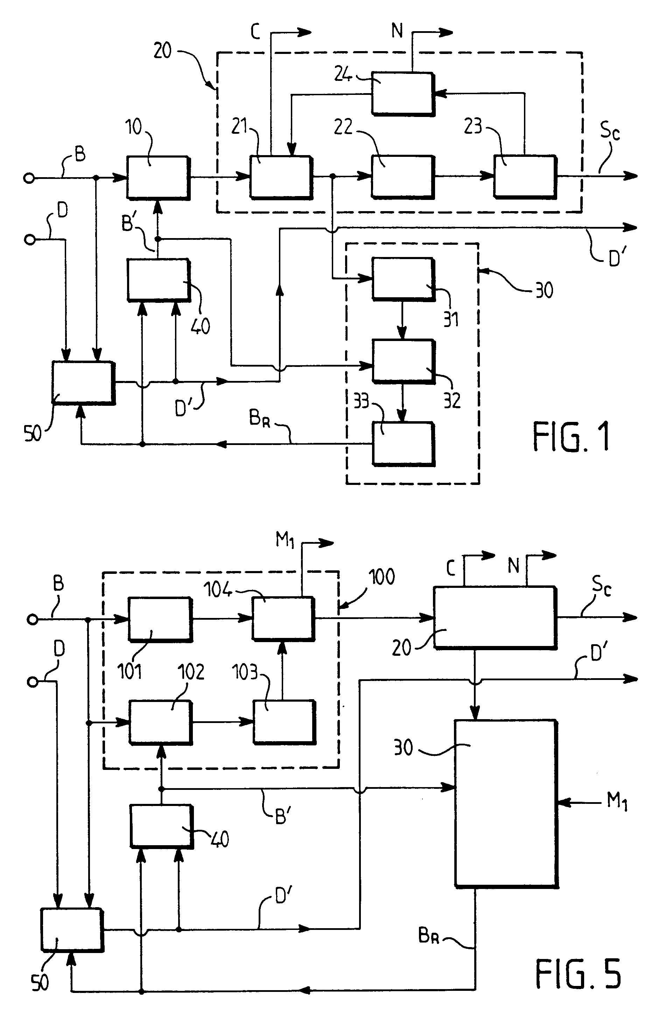

La description qui suit est effectuée d'abord en référence à la figure 1. On supposera préalablement que, dans le cas de l'application décrite ici à titre d'exemple non limitatif, on veut transmettre et/ou enregistrer des séquences d'images animées au format non entrelacé en luminance (comprenant par image 288 lignes de 352 points d'image par ligne), et incluant les deux composantes U et V en chrominance (également 352 x 288 points d'image), à la fréquence d'origine de 25 hertz, avec un débit souhaité de 1,2 Mbit/seconde. On suppose également que ces images d'origine ont été, en ce qui concerne leur composante de luminance, traitées selon le principe de sous-échantillonnage décrit dans la demande de brevet européen déjà citée, et rappelé plus haut.

La réalisation préalable de ce traitement conduit donc à disposer dans ce cas, pour la luminance, d'une part de blocs d'image classés en blocs dits compensés ou en blocs dits de repli selon qu'ils seront transmis et/ou stockés en mode compensé ou en mode de repli, et d'autre part de vecteurs de déplacement associés à ces blocs. Les vecteurs de déplacement sont associés à chaque bloc, de dimensions p x q par exemple, des images de rang pair ensuite éliminées (ce choix n'est donné qu'à titre d'exemple, et l'on pouvait aussi choisir de transmettre les images paires et d'éliminer les images impaires). La classification en blocs compensés ou en blocs de repli peut être opérée sur des blocs de taille différente de celle des précédentes, qu'on notera p' x q' par exemple.

Dans le cas de l'application particulièrement intéressante où les signaux à coder incluent des informations représentatives d'images animées avec un ou des disques compacts comme support des signaux transmis et/ou stockés, on a obtenu les meilleurs résultats pour p = q = p' = q' = 8. Mais cette hypothèse n'est nullement restrictive et le traitement décrit ci-dessous est applicable à d'autres tailles de blocs, ainsi qu'à d'autres formats d'image. On supposera également, dans l'exemple décrit en référence à la figure 1, que les informations disponibles à l'entrée du dispositif de codage sont uniquement des blocs compensés en mouvement, et l'on généralisera ultérieurement au cas où ces informations incluent des blocs de repli.

Ces signaux d'entrée, dans le cas ici décrit d'une composante de luminance de signaux d'image, correspondent ici à des images se succédant à une fréquence de 12,5 Hz, divisées en blocs de 8 x 8 points d'images, et accompagnées respectivement de vecteurs de déplacement D constituant des premières informations de mouvement.

Le dispositif de codage de la figure 1 comprend un étage dit de sélection, en l'occurrence un soustracteur 10, dont la sortie est reliée à un étage 20 constituant la chaîne de codage proprement dite. Cette chaîne de codage comprend elle-même, ici, un circuit 21 de transformation orthogonale et quantification (délivrant une information C de classification des blocs selon leur activité, définie en général à l'aide de seuils et en fonction de tests subjectifs liés aux contrastes, à la plus ou moins grande uniformité, etc...), un circuit 22 de codage à longueur variable, une mémoire-tampon 23 délivrant avec un débit constant les signaux codés $S_c$, et un circuit 24 de régulation de débit (délivrant une information N de normalisation renvoyée vers le circuit 21). Les informations auxiliaires C et N sont transmises, car elles seront utilisées à la réception, lors des opérations de transformation orthogonale et quantification inverses. Un exemple d'une telle chaîne de codage est décrit par exemple dans le brevet US-A-4394774 ou, dans un mode de réalisation encore plus avantageux, dans la demande de brevet européen n° 0310175.

Le soustracteur 10 reçoit d'une part les signaux d'entrée du dispositif de codage, constitués ici par des blocs d'image B compensés en mouvement, et d'autre part la sortie B′ d'un étage 40 dit de prédiction, et envoie vers l'entrée du circuit 21 de l'étage de codage 20 la différence entre ce bloc compensé en mouvement B reçu comme signal d'entrée et le signal B′, qui est un bloc prédit comme indiqué plus loin. Ainsi, l'étage de codage 20, au lieu de coder successivement tous les blocs d'une image $I_1$, puis tous les blocs d'une image $I_3$, d'une image $I_5$, etc... ne code-t-il que la différence entre ces images. Plus précisément, ce traitement de codage inter-image revient à coder, pour chaque bloc des images, la différence entre un bloc B de l'image courante $I_3$ et un bloc B′ de l'image $I_1$ précédemment traitée et reconstruite, compte tenu d'un vecteur de déplacement D′ entre B et B′ constituant une deuxième information de mouvement.

Le bloc prédit B′ est fourni par l'étage de prédiction 40 qui prélève dans l'image précédente reconstruite ($I_1$, lorsque l'image courant est $I_3$) les échantillons du bloc correspondant à B mais décalé spatialement du vecteur D′ et appelé $B_R$. Ces blocs reconstruits $B_R$ sont dans le cas présent fournis par un étage 30 de reconstruction, comprenant ici, en série et en sortie du circuit 21 de transformation orthogonale et quantification, un circuit 31 de transformation orthogonale et quantification inverses, un circuit 32 de reconstitution du signal présent avant la sélection du signal à coder effectivement (recevant également la sortie B′ de l'étage de prédiction 40 et effectuant l'opération inverse de celle réalisée par l'étage de sélection 10), et une mémoire d'image 33. C'est la sortie de cette mémoire d'image 33 qui est reliée à l'étage de prédiction 40 pour lui fournir les blocs $B_R$. Les vecteurs D′ constituant les deuxièmes informations de mouvement sont fournis par un étage 50 dit d'estimation de mouvement fonctionnant comme indiqué plus loin.

L'étage de prédiction 40 est ici, en fait, un circuit d'adressage de la mémoire 33 en fonction des vecteurs de déplacement D′ fournis par l'étage d'estimation de mouvement 50. Cet étage de prédiction peut inclure, à la suite du circuit d'adressage, un filtre dit de prédiction, destiné notamment à améliorer la prédiction et le codage. Le circuit 32 de l'étage de reconstruction 30 est, dans l'exemple décrit, un additionneur suivi d'un circuit d'adressage pour l'écriture dans la mémoire 33.

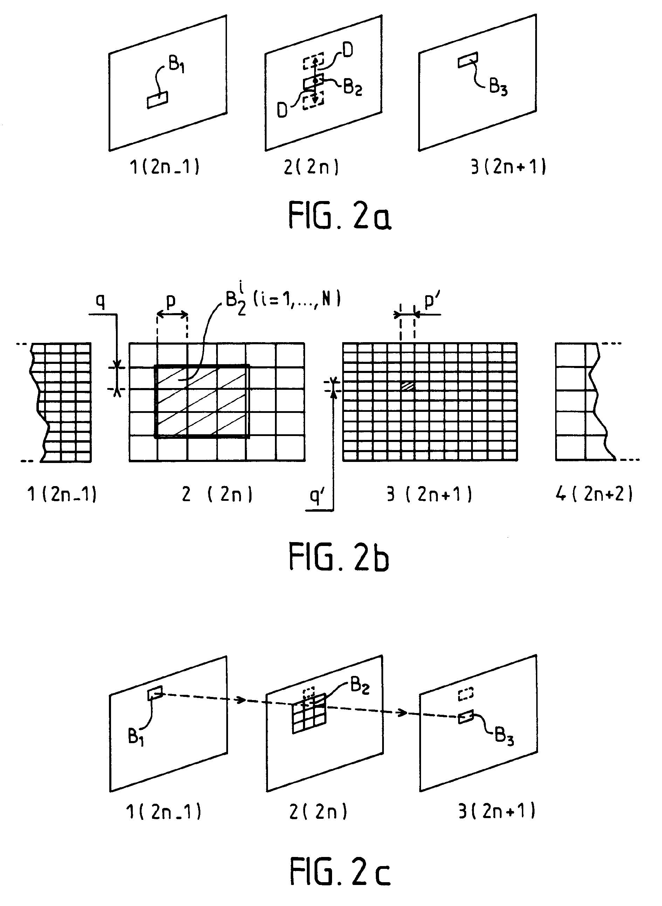

On a précédemment considéré qu'à chaque bloc $B_2$ (de taille p x q par exemple) des images paires $I_2$, $I_4$, etc... éliminées (et ensuite interpolées) était associé un vecteur de déplacement D. Ce vecteur est représenté sur le schéma de la figure 2a pour trois images successives $I_1$, $I_2$, $I_3$, également références $I_{2n-1}$, $I_{2n}$, $I_{2n+1}$ pour illustrer ce principe de manière plus générale. On a également représenté, dans les images $I_1$ et $I_3$ (ou $I_{2n-1}$ et $I_{2n+1}$) ensuite codées entourant $I_2$, les blocs $B_1$ et $B_3$ correspondants compte tenu de ce vecteur D. D'une manière générale, si l'on considère (voir la figure 2b représentant de façon similaire une suite d'images $I_{2n-1}$, $I_{2n}$, $I_{2n+1}$, $I_{2n+2}$) dans l'image transmise à coder un bloc $B_{2n+1}$, de taille p′ x q′, par exemple $B_3$ dans l'image $I_3$, on peut associer à ce bloc $B_3$ un voisinage (dont les dimensions sont de préférence liées à la valeur de la plage maximale de recherche du vecteur de déplacement dans le sous-ensemble d'estimation de mouvement du dispositif de prétraitement décrit dans la demande de brevet européen n° 90201554.4) composé de N blocs $B_{2n}^i$ ($B_2^i$, par exemple, avec i variant de 1 à N) dans le découpage de l'image $I_{2n}$ ($I_2$) en blocs de taille p x q. Il est alors probable que le vecteur de déplacement, noté D′, qui représente le mouvement du bloc $B_3$ (ou $B_{2n+1}$) entre l'image $I_1$ (ou $I_{2n-1}$) et l'image $I_3$ (ou $I_{2n+1}$) est proche du double de l'un des vecteurs $D_i$ associés aux blocs $B_2^i$ ou ($B_{2n}$). Cette conclusion peut être constatée en référence à la figure 2c : cette figure illustre en effet la possibilité que le vecteur D′ associé à un bloc $B_3(B_{2n+1})$ de l'image $I_3(I_{2n+1})$ soit égal à 2D, où 2D est le vecteur de déplacement associé à un bloc $B_2(B_{2n})$ de l'image $I_2(I_{2n})$ voisin de la position du bloc $B_3(B_{2n+1})$ dans l'image $I_2(I_{2n})$, c'est-à-dire voisin du bloc de $I_2(I_{2n})$ qui est en correspondance spatiale avec ce bloc $B_3(B_{2n+1})$.

L'étage d'estimation de mouvement 50 a pour fonction de tester chacun de ces vecteurs $D_i$ et de déterminer le meilleur d'entre eux, puis de réaliser une correction sur ce vecteur sélectionné. L'objectif de cette correction est d'obtenir une meilleure précision sur la valeur des composantes du vecteur ainsi sélectionné. En effet, si par exemple un vecteur sélectionné $D_i$ a une valeur connue avec une précision d'un point d'image sur chaque composante, tout vecteur double ou proche du double de ce vecteur $D_i$ a une valeur connue avec une précision deux fois plus faible, de deux points d'images. On peut alors améliorer cette précision en réalisant la correction proposée, ici de +/- un point d'image sur chaque composante.

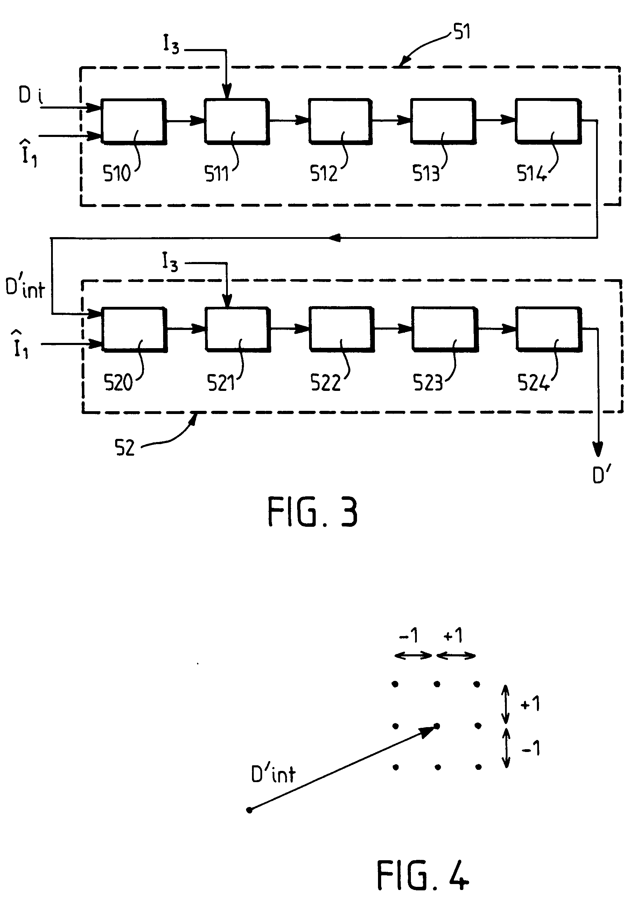

L'étage 50, représenté sur la figure 3, comprend d'une part un premier sous-ensemble 51 de détermination de vecteur. Ce sous-ensemble 51, qui réalise la fonction de test, doit déterminer celui des vecteurs $D_i$ qui minimise l'expression $\Sigma (I_3(x) - \hat{I}_1(x-2D_i))^2$ pour chaque bloc de taille p′ x q′, $I_3(x)$ étant l'image courante et $\hat{I}_1(x-2D_i)$ l'image reconstruite et décalée de $-2D_i$, et comprend successivement à cet effet :

- un circuit d'adressage 510, qui prélève dans la mémoire d'image 33 les échantillons de l'image reconstruite $\hat{I}_1$ correspondant à ceux du bloc $B_3$ et décalés de ($-2D_i$), pour le vecteur $D_i$ considéré ;
- un soustracteur 511, qui effectue la différence entre $I_3(x)$, image courante, et $\hat{I}_1(x-2D_i)$, image reconstruite et décalée ;
- un élévateur au carré 512 de la différence ainsi obtenue ;

- un sommateur 513, sur tout le bloc $B_3$, des différences ainsi obtenues et élevées au carré ;
- un comparateur 514, qui détermine celui des vecteurs $D_i$ conduisant ainsi au résultat le plus faible, ce vecteur sélectionné étant noté $D'_{int}$.

L'étage 50 comprend d'autre part un deuxième sous-ensemble 52 de correction de vecteur. Ce sous-ensemble 52, destiné à effectuer une correction de $\pm$ 1 point d'image (voir la figure 4) sur chaque composante du vecteur $D'_{int}$ sélectionné par le sous-ensemble 51, comprend successivement des éléments 520 à 524 similaires aux éléments du sous-ensemble 51, à ceci près que le circuit d'adressage 520, au lieu de recevoir les différents vectuers $D_i$ à tester, reçoit le vecteur $D'_{int}$ et lui applique les neuf différentes possibilités de correction de $\pm$ 1 point d'image (telles que représentées dans l'exemple de voisinage de la figure 4). On obtient cette fois en sortie du comparateur 524, et donc de l'étage d'estimation de mouvement 50, le vecteur $D'$ qui est utilisé pour effectuer la prédiction sur le bloc $B_3$.

En général, chaque comparateur, 514 ou 524, compare les résultats deux à deux et sélectionne le plus faible, mais il pourrait aussi assurer le stockage provisoire de tous les résultats avant de réaliser la sélection de l'un d'entre eux. On précisera aussi qu'au lieu de prévoir deux sous-ensembles 51 et 52 en série, on pourrait ne prévoir qu'un seul sous-ensemble réalisant d'abord la fonction de détermination de vecteur, puis celle de correction du vecteur ainsi déterminé. Une telle solution économise quelques circuits, mais conduit en contrepartie à un fonctionnement un peu plus lent. Enfin, l'adressage réalisé par le (ou les) circuit(s) d'adressage est ici fait de manière directe sur l'image $I_1$ si la précision sur le vecteur $D'$ est d'un point d'image. Mais, si une précision meilleure -par exemple d'un demi-point d'image- est recherchée, l'adressage est effectué sur une autre image obtenue à partie de l'image $I_1$ par une interpolation d'un facteur proportionnel à la précision supplémentaire voulue.

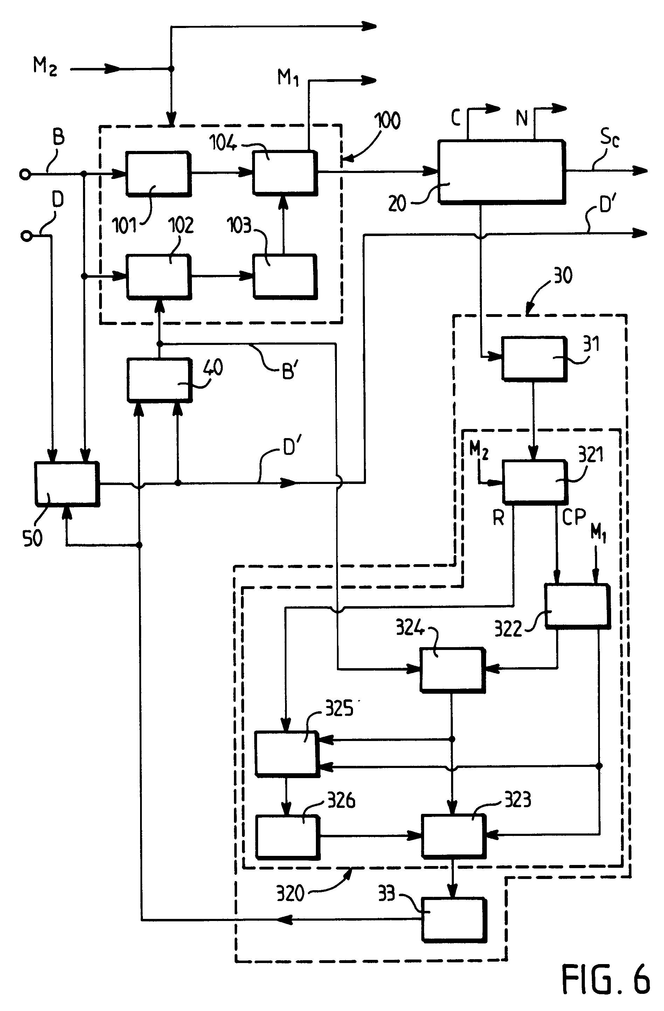

Dans un deuxième mode de réalisation, représenté sur la figure 5, du dispositif de codage selon l'invention, l'étage de sélection est non plus un simple soustracteur 10, mais un circuit 100 dit de décision inter/intra, dont on précise ci-dessous la structure et la fonction.

Cette variante de réalisation est intéressante quand on veut affiner le codage des blocs par la réalisation d'un traitement qui est différent selon l'énergie contenue dans les différentes composantes en fréquence des signaux courants à traiter. Le circuit de décision inter/intra 100 comprend d'une part un premier circuit 101 de calcul de l'énergie contenue, par bloc B des signaux à traiter, dans les composantes autres que la composante continue. Le circuit de décision inter-intra 100 comprend également un soustracteur 102, qui reçoit d'une part les échantillons correspondant à un bloc B courant, d'autre part les échantillons correspondant au bloc B' prédit correspondant, et qui est suivi d'un deuxième circuit 103 de calcul d'énergie. Ce circuit 103 calcule de même l'énergie contenue dans ce bloc d'échantillons constitué en sortie du soustracteur 102 (toujours hors composante continue). Un comparateur 104 reçoit alors la sortie des circuits de calcul d'énergie 101 et 103 et sélectionne, selon le résultat de cette comparaison, l'un ou l'autre de deux modes de codage dits codage inter-image et codage intra-image (appelés codages inter et intra par abréviation). Dans l'un ou l'autre cas, une information additionnelle $M_1$ précisant ledit mode de codage est transmise, car elle sera nécessaire, à la réception, pour la reconstruction des images. Cette information $M_1$ est également fournie au circuit de reconstitution de signal 32 de l'étage de reconstruction 30.

Dans un troisième mode de réalisation, représenté sur la figure 6, le dispositif de codage selon l'invention doit s'adapter au fait que le circuit d'estimation de mouvement qui a permis d'obtenir les vecteurs D associés aux signaux d'entrée B peut, comme on l'a signalé, être défaillant. Dans ce cas, les informations d'entrée du dispositif de codage ne sont plus uniquement des blocs compensés en mouvement, mais peuvent aussi être des blocs de repli obtenus par combinaison d'échantillons de $I_2$ and $I_3$ comme indiqué dans la demande de brevet européen EP-A-0404238 déjà citée (cas du repli avec sous-échantillonnage). Une information additionnelle $M_2$ accompagne alors, bien entendu, ces informations d'entrée pour indiquer la nature des blocs et le mode de fonctionnement, compensé ou de repli, qui a permis de les obtenir. Cette information additionnelle $M_2$ est d'une part transmise, puisqu'elle sera nécessaire, à la réception, pour la reconstruction des images, et d'autre part fournie au circuit de décision inter/intra 100 ainsi qu'au circuit de reconstitution de signal 32 de l'étage de reconstruction 30.

Dans ce troisième mode de réalisation, le circuit de décision inter/intra 100 reçoit l'information additionnelle $M_2$, de façon que le mode de codage soit forcé en intra lorsque se présentent à l'entrée B du dispositif de codage des blocs de repli. L'étage de reconstruction 30 est modifié de la façon suivante : en sortie du circuit 31, inchangé, de transformation orthogonale et quantification inverses, le circuit 32 est maintenant remplacé par un circuit 320 de reconstitution du signal présent avant sélection du signal à coder, la sortie de ce circuit de reconstitution 320 étant fournie à la mémoire 33. Ce circuit de reconstitution 320 comprend d'abord un commutateur 321, commandé par l'information $M_2$ pour opérer la sélection entre un traitement en mode compensé et un traitement en mode de repli. Dans le cas (noté CP) du traitement en mode compensé, chaque bloc, comme on l'a vu, peut être codé en inter ou en intra, selon la position d'un commutateur 322 recevant la sortie C du commutateur 321 et commandé par l'information $M_1$. La sortie de ce commutateur 321 est alors envoyée vers un aiguilleur 323, soit directement dans le cas du codage intra, soit, dans le cas du codage inter, par l'intermédiaire d'un additionneur 324 qui reçoit sur une deuxième entrée la sortie de l'étage de prédiction 40 pour l'ajouter à la sortie du commutateur 322 présente sur sa première entrée. Dans le cas (noté R) du traitement en mode de repli, un circuit de sous-échantillonnage spatial 325 reçoit la sortie R du commutateur 321 pour ne conserver dans chaque bloc de repli que les échantillons appartenant à l'image courante à reconstruire. Les blocs en mode compensé sont échantillonnés de manière similaire, la sortie intra du commutateur 322 et la sortie de l'additionneur 324 étant fournies au circuit 325 à cet effet. Un circuit 326 reçoit alors les échantillons présents sur la sortie de ce circuit 325 pour effectuer l'interpolation des échantillons manquants des blocs de repli. Après cette interpolation, la sortie du circuit 326 est envoyée à l'aiguilleur 323 pour assurer la réinsertion des blocs en mode de repli dans l'image reconstruite. La sortie de l'aiguilleur 323, sur laquelle est présente cette image reconstruite, est envoyée vers la mémoire 33.

Un quatrième mode de réalisation, correspondant (dans la demande de brevet européen EP-A-0404238 déjà citée) au cas du mode de repli sans sous-échantillonnage, peut être proposé. Dans ce cas, l'information additionnelle $M_2$ indique si le bloc traité fait partie d'une image éliminée ou d'une image transmise et commande à cet effet, dans l'étage de reconstruction 30, un commutateur (non représenté) prévu en tête de cet étage pour ne transmettre vers la suite dudit étage 30 que les blocs des images transmises. Les blocs des images éliminées sont codés, mais ne sont pas reconstruits par l'étage 30. Les images $I_1$ et $I_3$ étant toutes deux reconstruites quand le traitement des blocs de l'image $I_2$ commence, l'étage de prédiction 40 peut, dans le cas de ce mode de réalisation, réaliser son adressage de mémoire pour prélever soit un bloc $B_1$ appartenant à l'image $I_1$ précédente, soit un bloc $B_3$ appartenant à l'image $I_3$ suivante, soit encore, en faisant appel à l'une et l'autre image, un bloc $B_{13} = 1/2 (I_1 (X-D_{13}) + I_3 (X+D_{13}))$ où X désigne les points du blocs $B_2$ en mode de repli et $D_{13}$ le vecteur d'interpolation associé à $B_2$ (qui peut être par exemple, sans que ce soit là une limitation, le vecteur de déplacement D estimé par le circuit d'estimation de mouvement décrit dans ladite demande déjà citée).

Dans le cas maintenant décrit où les signaux d'entrée du dispositif de codage correspondent aux signaux U et V de différence de couleur -c'est-à-dire à la composante de chrominance- de la séquence d'images animées, lesdits signaux d'entrée n'ont pas été nécessairement soumis, comme la luminance, à la réalisation préalable d'un traitement conduisant à une classification des bloc d'image en blocs compensés ou en blocs de repli. Il est cependant possible, comme pour la luminance, de tenir compte du fait que des informations de mouvement D sont disponibles en même temps que lesdits signaux d'entrée pour proposer un dispositif de codage amélioré.

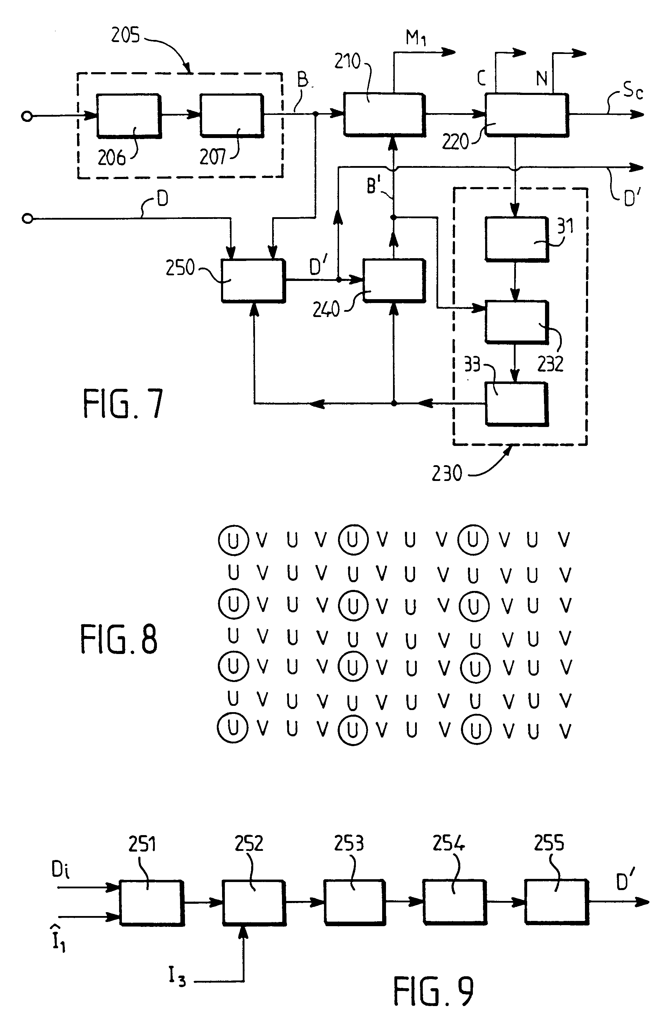

Un tel dispositif de codage est représenté, dans un exemple particulier de réalisation, sur la figure 7. Le dispositif représenté comprend ici tout d'abord un étage de filtrage spatial 205 des signaux de chrominance, qui comprend successivement un circuit de préfiltrage spatial 206, opérant séparément sur les signaux U et sur les signaux V, et un circuit de sous-échantillonnage spatial 207. En effet, le contenu de composantes de chrominance étant plus pauvre en hautes fréquences que celui de composantes de luminance, une première réduction de débit est obtenue par un sous-échantillonnage spatial de chacun des signaux U et V.

Ce sous-échantillonnage spatial, ici d'un facteur 4, est représenté sur la figure 8 pour les signaux U par exemple, mais est similaire pour les signaux V. Sur cette figure 8, on a représenté les points d'image de la composante de chrominance par le symbole U ou V correspondant, et l'on a entouré d'un cercle ceux que le sous-échantillonnage conserve. On constate alors qu'à un bloc de 4 x 4 points d'image des signaux U (ou V, de façon similaire) correspond un bloc 16 x 8 en luminance (ou huit blocs 4 x 4), c'est-à-dire qu'un bloc de 8 x 8 échantillons U (ou V respectivement) couvre la même étendue spatiale qu'un bloc 32 x 16 de luminance.

Plus généralement, le sous-échantillonnage spatial de la composante de chrominance fait qu'à un bloc $B_{chr}$ de chrominance de p x q échantillons U (ou V respectivement) devant être codés correspondent n blocks $B_l$ de luminance dont l'ensemble recouvre la même étendue spatiale. Le dispositif de codage inclut donc, dans le cas de la chrominance, un estimateur de mouvement destiné à déterminer, pour le bloc d'image à reconstruire, quel vecteur de déplacement peut être utilisé pour cette reconstruction parmi l'ensemble des vecteurs de déplacement $D_i$ (i variant de 1 à n) attachés auxdits blocs $B_i$ de luminance. De plus, on va ainsi reconstruire, ici, d'une part une image de chrominance de range pair, notée $\hat{I}_{chr2}$, $\hat{I}_{chr4}$, etc..., par rapport à l'image de rang opposé $I_{chr1}$, $I_{chr3}$, etc... qui la précède, et d'autre part une image de chrominance de rang impair, notée $\hat{I}_{chr3}$, $\hat{I}_{chr5}$, etc..., par rapport à l'image de même rang $I_{chr1}$, $I_{chr3}$, etc... qui la précède.

Le dispositif de codage de la figure 7 comprend donc, à la suite de l'étage de filtrage spatial 205, l'étage de sélection, puis un étage 220 constituant la chaîne de codage et identique à l'étage 20. L'étage de sélection est ici un circuit de décision inter/intra 210 de même structure que le circuit 100 des figures 5 et 6. Cet étage 210 reçoit d'une part les blocs B de sortie de l'étage de filtrage spatial et d'autre part les blocs de sortie B' d'un étage de prédiction 240, identique à l'étage 40 des figures 1, 5 et 6 et donc constitué, comme lui, d'un circuit d'adressage de la mémoire de sortie d'un étage de reconstruction 230 similaire à l'étage 30. L'étage 210 délivre comme précédemment une information additionnelle $M_1$, relative au mode de codage inter ou intra et qui est transmise également, puisque nécessaire à la réception. L'adressage de la mémoire est effectué en fonction de vecteurs de déplacement D′ fournis par un étage d'estimation 250 et qui constituent comme précédemment les deuxièmes informations de mouvement. Dans l'étage de reconstruction 230, le circuit de reconstruction, référencé 232 et situé entre un circuit 31 de transformation orthogonale et quantification inverses et une mémoire d'image 33, est similaire à celui de la figure 6, aux exceptions près suivantes :

- l'absence de classification en blocs compensés et blocs de repli rend inutile la voie incluant les circuits 321, 325, 326, et ces éléments sont donc supprimés, la sortie du circuit 31 étant alors directement reliée à l'entrée du circuit 322 ;
- l'aiguilleur 323 n'est plus utile et est remplacé par un interrupteur fonctionnant ici à la cadence de 12,5 hertz pour n'envoyer vers la mémoire 33 que les seules images nécessaires, ici les images impaires.

L'étage d'estimation de mouvement 250, représenté sur la figure 9, comprend ici un seul sous-ensemble de détermination de vecteur. En effet, en raison de la moindre définition et du contenu plus pauvre de la chrominance en hautes fréquences, la correction sur le vecteur sélectionné, réalisée dans le cas de la luminance par le sous-ensemble 52, n'est ici plus nécessaire. La détermination de vecteur est effectuée à partir d'une part des signaux d'entrée B à traiter, d'autre part des signaux déjà traités lors du cycle de traitement précédent et donc disponibles en sortie de l'étage de reconstruction 230, et également desdites premières informations de mouvement. Ce sous-ensemble est tout à fait similaire au sous-ensemble 51 décrit précédemment, et l'estimateur de mouvement réalise le choix de vecteur qui minimise le même critère que dans le cas de la luminance. ces premières informations de mouvement sont ici les n vectuers $D_i$ attachés aux n blocs $B_i$ de luminance qui correspondent au bloc de chrominance considéré. Le sous-ensemble de détermination de vecteur qui constitue ici l'étage d'estimation de mouvement 250 comprend tout d'abord un circuit d'adressage 251, recevant sur une première entrée lesdits signaux précédemment traités, c'est-à-dire les blocs $B_R$ de sortie de l'étage 230 de reconstruction (d'une image $\hat{I}_1$), et sur une deuxième entrée les n vecteurs $D_i$ constituant les premières informations de mouvement. Le circuit d'adressage 251 est suivi d'un soustracteur 252, d'un élévateur au carré 253, d'un sommateur 254, et d'un comparateur 255.

Il faut alors ici distinguer deux situations. Dans la première situation, pour la détermination de deuxièmes informations de mouvement D′ relatives au mouvement entre une image de rang impair et l'image de rang pair qui lui succède, par exemple entre $I_1$ et $I_2$, entre $I_3$ et $I_4$, etc..., le circuit d'adressage 251 reçoit directement les vecteurs $D_i$, et le soustracteur 252 reçoit dans ce cas, sur sa deuxième entrée, non reliée au circuit d'adressage, les signaux courants, qui à cet instant correspondent à $I_2$, $I_4$, etc... Par contre, dans la deuxième situation, lorsque l'étage 250 effectue la détermination de deuxièmes informations de mouvement D′ relatives au mouvement entre images de rang impair successive, par exemple entre $I_1$ et $I_3$, entre $I_3$ et $I_5$, etc..., le circuit d'adressage 251 reçoit les vecteurs $D_i$ cette fois par l'intermédiaire d'un multiplicateur par deux non représenté, les signaux courants présents sur la deuxième entrée du soustracteur 252 correspondant maintenant à $I_3$, $I_5$, etc.... En effet, dans le premier cas, les deuxièmes informations de mouvement sont, en approximation, de l'ordre de grandeur des premières informations de mouvement, tandis que, dans le deuxième cas, elles sont en approximation, de l'ordre de grandeur du double de ces premières informations de mouvement.

Réciproquement, lorsque des signaux ont été, préalablement à leur transmission et/ou leur stockage, codés dans des dispositifs de codage tels que ceux qui viennent d'être décrits, leur décodage doit être prévu, pour permettre une reconstruction des signaux d'origine.

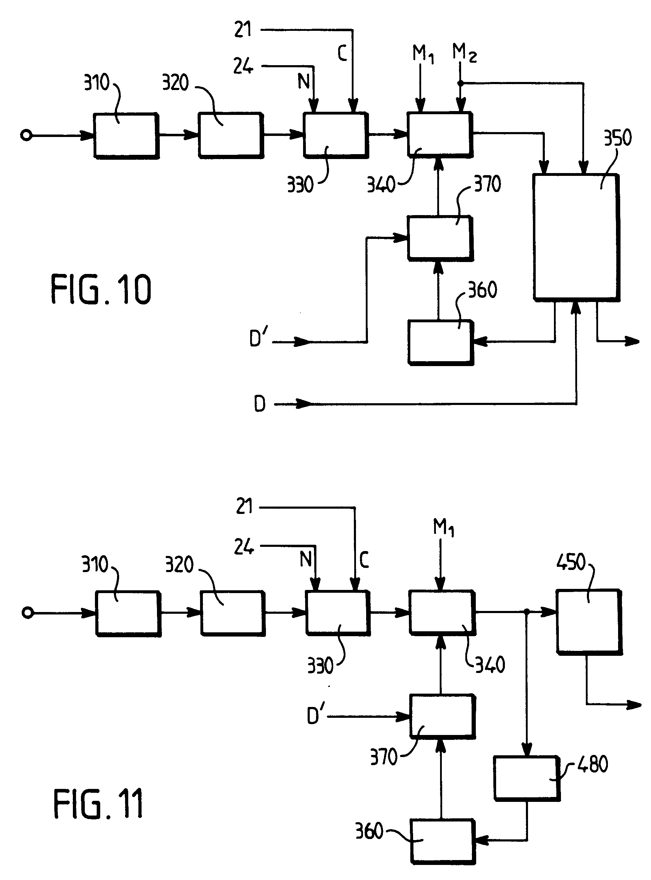

Dans le cas où ces signaux d'origine (à l'émission, avant codage) correspondent aux signaux de luminance d'une séquence d'images de télévision, un exemple de réalisation de dispositif de décodage approprié est représenté sur la figure 10. Dans ce dispositif de décodage, les signaux transmis et/ou stockés sont d'abord envoyés vers une mémoire-tampon 310, à la sortie de laquelle est prévu un circuit 320 de décodage à longueur variable. Ce circuit 320 fournit, pour les différents blocs successifs, des coefficients quantifiés, qui sont alors envoyés vers un circuit 330 de quantification et transformation orthogonale inverses, la quantification inverse étant réalisée à l'aide d'un signal de orme N délivré à l'émission par le circuit de régulation de débit 24 (voir les figures 1, 5, 6, 7) et ensuite transmis et/ou stocké, précisément en vue de l'opération inverse à la réception, lors du décodage.

Le dispositif de décodage de la figure 10 comprend, dans le cas du prétraitement avec sous-échantillonnage, un circuit 340 de reconstruction de lots d'informations à partir d'une part des signaux de sortie du circuit 330 de quantification et transformation orthogonale inverses, d'autre part d'informations de prédiction préalablement déterminées (au cours d'un précédent cycle de reconstruction), et également des informations $M_1$ (codage inter ou intra) et $M_2$ (blocs compensés ou de repli). La sortie de ce circuit 340 est envoyée vers un circuit de mémorisation 360, par l'intermédiaire d'un circuit 350 de traitement de signaux tel que celui décrit dans la demande de brevet européen n° 90201554.4. Ce document décrit en effet, sur sa figure 7, un dispositif qui comprend essentiellement d'une part un sous-ensemble de compensation de mouvement pré-

EP 0 418 952 B1

cédé d'un premier commutateur à deux entrées recevant sur celles-ci les signaux d'entrée du dispositif soit directement, soit par l'intermédiaire d'un premier sous-ensemble de sous-échantillonnage et d'interpolation, d'autre part un deuxième sous-ensemble de sous-échantillonnage et d'interpolation précédé d'un deuxième commutateur à deux entrées recevant également sur celles-ci les signaux d'entrée du dispositif soit directement, soit par l'intermédiaire du montage en série comprenant le premier commutateur -et les deux voies qui le précèdent- et le sous-ensemble de compensation de mouvement. Un troisième commutateur, commandé comme les deux précédents par l'information de mode compensé ou de mode de repli, sélectionne soit la sortie du sous-ensemble de compensation de mouvement, soit celle du deuxième sous-ensemble de sous-échantillonnage et d'interpolation. Un quatrième commutateur sélectionne finalement, à un rythme double de celui des signaux d'entrée, soit la sortie du troisième commutateur, soit celle du premier commutateur mais retardée d'une période d'image. Les deux sous-ensembles de sous-échantillonnage et d'interpolation comprennent chacun, successivement, un circuit de sous-échantillonnage spatial et un circuit d'interpolation spatiale adapté au mode de sous-échantillonnage spatial utilisé.

Comme le circuit 350 délivre les images I$_2$ et I$_3$ de sortie du dispositif de décodage, il inclut ici un commutateur (non représenté), permettant de n'envoyer vers le circuit de mémorisation 360 que l'image I$_3$ qui, seule, doit être stockée. Les signaux ainsi transmis au circuit 350 comprennent en général, pour chaque lot d'information tel qu'une image dans l'application plus spécialement décrite et comme dans le cas du dispositif de traitement dont on vient de rappeler la structure, pour partie des blocs reconstruits (correspondant au mode compensé et codés soit en inter, soit en intra) et pour partie des blocs en mode de repli.

Dans le cas du prétraitement sans sous-échantillonnage, le circuit 350 de traitement de signaux, réalisé là aussi par exemple comme indiqué dans la demande de brevet européen EP-A-0404238, ne comprend plus, bien entendu, les sous-ensembles de sous-échantillonnage et d'interpolation, ni les premier et deuxième commutateurs correspondants, et les première et deuxième séquences de signaux prévues dans ce cas sont fournies à l'entrée respectivement du sous-ensemble de compensation de mouvement et du troisième commutateur.

Le stockage dans le circuit de mémorisation 360 achève le cycle de reconstruction et permet de disposer des signaux utiles pour la détermination desdites informations de prédiction et le cycle de reconstruction suivant. Ces informations de prédiction sont déterminées dans un circuit de prédiction 370 recevant d'une part la sortie du circuit de mémorisation 360 et d'autre part les deuxièmes informations de mouvement D', et est ici, en fait, un circuit d'adressage du circuit 360 compte tenu des déplacements indiqués par ces informations D'.

Dans le cas où les signaux d'origine (à l'émission, avant codage) correspondent aux signaux de chrominance d'une séquence d'images de télévision, un autre exemple de réalisation de dispositif de décodage est représenté sur la figure 11. Les circuits 310, 320, 330, 360, 370 sont, dans ce dispositif, identiques aux circuits de mêmes références sur la figure 10. Le circuit de reconstruction 340 est très similaire au précédent, la seule différence étant que, dans le cas de la figure 11, il ne reçoit pas d'informations M$_2$ puisqu'en général il n'existe pas, pour la chrominance, de distinction entre blocs compensés ou de repli. La sortie de ce circuit de reconstruction 340 est envoyée d'une part vers un circuit 450 de réinterpolation des signaux de différence de couleur, dont la sortie est destinée à être fournie à un dispositif de visualisation, et d'autre part vers un interrupteur 480, fonctionnant ici à une cadence de 12,5 hertz et inséré entre le circuit 340 et le circuit de mémorisation 360. Cet interrupteur 480 est destiné à éliminer un lot d'informations reconstruit sur deux et ne sélectionner que celui que est utile pour la prédiction, selon le même principe de fonctionnement que l'interrupteur de sélection des images impaires, dans le circuit de reconstruction 232 de la figure 7.

Bien entendu, à partir des réalisations décrites, des variantes peuvent être proposées. On a vu en particulier que les traitements concernant les signaux U et V de différence de couleur étaient effectués séparément, par exemple le préfiltrage spatial réalisé par le circuit 206, et les décisions prises par le circuit 210. On peut, au contraire, choisir d'effectuer ces traitements de façon commune sur U et V, en reconstituant globalement la composante de chrominance. Dans ce cas, la fonction de test réalisée par le sous-ensemble de détermination de vecteur de l'étage d'estimation de mouvement est elle aussi commune : elle est alors exécutée sous la forme l'une détermination de celui des vecteurs D$_i$ qui minimise, non plus pour U ou pour V l'expression donnée plus haut, mais, maintenant, l'expression suivante :

$$\sum_U (I_2(x) - \hat{I}_1(x-D_i))^2 + \sum_V (I_2(x) - \hat{I}_1(x-D_i))^2$$

ou l'expression suivante :

11

$$\sum_{U} (I_3(x) - \hat{I}_1(x-2D_i))^2 + \sum_{V} (I_3(x) - \hat{I}_1(x-2D_i))^2$$

selon qu'on se trouve dans l'une ou l'autre des deux situations définies précédemment (mouvement entre images de rangs impair et pair, ou entre images de rang impair), les vecteurs ainsi sélectionnés étant transmis et/ou stockés de façon commune pour U et V.

## Revendications

1. Dispositif de codage de signaux d'entrée représentatifs d'images dites d'origine ($I_1$, $I_2$, $I_3$, $I_4$, $I_5$,...) organisées en une séquence où elles sont repérées par leur rang, ou parité, apparaissant en indice, ledit dispositif comprenant :

   (a) un étage (20) de codage à longueur variable ;

   (b) un étage (30) de reconstruction connecté en dérivation dans l'étage de codage et prévu pour exécuter, sur les signaux présents à son point de raccordement avec ledit étage de codage, les opérations inverses de celles déjà exécutées, en ce point de raccordement, par ledit étage de codage sur les signaux d'entrée de cet étage de codage ;

   (c) un étage d'estimation de mouvement par blocs délimités à l'intérieur desdites images ;

   (d) un étage (40) de prédiction à partir des signaux de sortie desdits étages de reconstruction et d'estimation de mouvement ; ledit dispositif de codage étant caractérisé en ce que :

   (A) l'étage (50) d'estimation de mouvement comprend des moyens prévus pour déterminer, à partir, d'une part, de signaux d'entrée ($I_1$, $I_3$, $I_5$, $I_7$,...) d'une parité déterminée dans ladite séquence, destinés à être transmis, et d'autre part d'informations de mouvement (D) dites premières, relatives au mouvement entre ces signaux d'entrée et représentatives, dans ladite séquence des signaux d'entrée complémentaires ($I_2$, $I_4$, $I_6$, $I_8$,...) de parité opposée, non destinés à être transmis et auxquels elles se substituent, des informations de mouvement (D'), dites deuxièmes mais représentatives cette fois, dans ladite séquence, du mouvement intervenu entre signaux d'entrée successifs ($I_1$ et $I_3$ ; $I_3$ et $I_5$ ; $I_5$ et $I_7$ ; etc..) de même parité dite déterminée, dits respectivement signaux d'entrée postérieurs ($I_3$;$I_5$;$I_7$,...) et antérieurs ($I_1$;$I_3$;$I_5$,...), lesdites deuxièmes informations (D') étant destinées audit étage de prédiction ;

   (B) l'étage de prédiction est suivi d'un étage de sélection (100), à partir d'une part des signaux d'entrée du dispositif et d'autre part des signaux de sortie dudit étage de prédiction, des signaux à coder dans ledit étage de codage ;

   (C) l'étage de reconstruction comprend une voie (31, 320, 33) de traitement additionnel lorsque les signaux d'entrée du dispositif sont accompagnés d'informations additionnelles (M2).

2. Dispositif de codage selon la revendication 1, caractérisé en ce que l'étage d'estimation de mouvement comprend un premier sous-ensemble (51) de détermination d'un vecteur intermédiaire à partir desdites premières informations de mouvement, suivi d'un deuxième sous-ensemble (52) de correction de la valeur de ce vecteur intermédiaire, délivrant lesdites deuxièmes informations de mouvement (D').

3. Dispositif de codage selon la revendication 2, caractérisé en ce que lesdits sous-ensembles (51, 52) de détermination de vecteur intermédiaire et de correction de ce vecteur comprennent chacun en série un circuit d'adressage (510, 520), un soustracteur (511, 521), un élévateur au carré (512, 522), un sommateur (513, 523), et un comparateur (514, 524).

4. Dispositif de codage selon la revendication 1, caractérisé en ce que :

   (A) ses signaux d'entrée sont fournis à l'étage de sélection (210) par l'intermédiaire d'un étage de filtrage spatial (205) ;

   (B) l'étage d'estimation (250) est prévu pour délivrer des deuxièmes informations (D') relatives d'une part au mouvement entre les signaux d'entrée de parité déterminée et les signaux d'entrée de parité opposée qui les suivent, et d'autre part au mouvement entre signaux d'entrée de parité déterminée successifs.

5. Dispositif de codage selon la revendication 4, caractérisé en ce que ledit étage d'estimation de mouvement (250) comprend un sous-ensemble de détermination de vecteur, comprenant lui-même en série un circuit d'adressage (251) qui reçoit sur une première entrée lesdits signaux précédemment traités par l'étage de reconstruction et sur une deuxième entrée lesdites premières informations de mouvement (D), un soustracteur (252), un élévateur au carré (253), un sommateur (254), et un comparateur (255), et en ce que :

(a) pour la détermination des deuxièmes informations (D') relatives au mouvement entre les signaux de parité déterminée et les signaux de parité opposée qui les suivent, le soustracteur (252) reçoit sur sa deuxième entrée non reliée au circuit d'adressage (251) lesdits signaux de parité opposée ;

(b) pour la détermination des deuxièmes informations (D') relatives au mouvement entre signaux de parité déterminée successifs, un multiplicateur par deux précède en série la deuxième entrée dudit circuit d'adressage, et le soustracteur reçoit sur sa deuxième entrée non reliée audit circuit d'adressage les signaux de parité déterminée.

6. Dispositif de décodage de signaux préalablement transmis et/ou stockés après réduction de débit, lesdits signaux, représentatifs d'images dites d'origine ($I_1$, $I_2$, $I_3$, $I_4$, $I_5$,...) organisées en une séquence où elles sont repérées par leur rang, ou parité, apparaissant en indice, ayant été, avant la transmission et/ou le stockage, codés dans un dispositif de codage comprenant :

(a) un étage de codage à longueur variable ;

(b) un étage de reconstruction connecté en paralèle dans l'étage de codage et prévu pour exécuter, sur les signaux présents à son point de raccordement avec ledit étage de codage, les opérations inverses de celles déjà exécutées, en ce point de raccordement, par ledit étage de codage sur les signaux d'entrée dudit étage de codage ;

(c) un étage d'estimation de mouvement par blocs délimités à l'intérieur desdites images, prévu pour déterminer, à partir, d'une part, de signaux d'entrée ($I_1$, $I_3$, $I_5$, $I_7$,...) d'une parité déterminée dans ladite séquence, destinés à être transmis, et d'autre part d'informations de mouvement (D), dites premières, relatives au mouvement entre ces signaux d'entrée et représentatives, dans ladite séquence des signaux d'entrée complémentaires ($I_2$, $I_4$, $I_6$, $I_8$,...) de parité opposée, non destinés à être transmis et auxquels elles se substituent, des informations de mouvement (D'), dites deuxièmes mais représentatives cette fois, dans ladite séquence, du mouvement intervenu entre signaux d'entrée successifs ($I_1$ et $I_3$ ; $I_3$ et $I_5$ ; $I_5$ et $I_7$ ; etc..) de même parité dite déterminée, dits respectivement signaux d'entrée postérieurs ($I_3$; $I_5$; $I_7$,...) et antérieurs ($I_1$; $I_3$; $I_5$,...), lesdites deuxièmes informations (D') étant destinées audit étage de prédiction ;

(d) un étage de prédiction à partir des signaux de sortie desdits étages de reconstruction et d'estimation de mouvement ;

(e) un étage de sélection, à partir d'une part des signaux d'entrée du dispositif de codage et d'autre part des signaux de sortie dudit étage de prédiction, des signaux à coder dans ledit étage de codage ; ledit dispositif de décodage comprenant un étage de-décodage qui comprend lui-même en série une mémoire-tampon (310), un circuit de décodage (320), et un circuit (330) de quantification et transformation orthogonale inverses des signaux décodés recevant également des signaux C et N préalablement transmis et/ou stockés et constituant respectivement une information de classification des blocs selon leur contenu et une information de normalisation, caractérisé en ce qu'il comprend également :

(1) un circuit (340) de reconstruction d'images à partir des signaux de sortie dudit circuit de quantification et transformation orthogonale inverses et d'informations de prédiction déterminées au cours d'un précédent cycle de reconstruction ;

(2) un circuit de traitement (350) destiné à restituer des images selon une disposition similaire à l'agencement des images d'origine ;

(3) un circuit de prédiction (370), destiné à délivrer lesdites informations de prédiction à partir d'une part d'informations liées au contenu desdites images reconstruites et d'autre part desdites deuxièmes informations de mouvement (D').

7. Dispositif de décodage selon la revendication 6, caractérisé en ce que lesdits signaux représentatifs sont les signaux de luminance d'une séquence d'images de télévision, en ce que ledit circuit (350) de traitement est un étage de sous-échantillonnage et d'interpolation, avec ou sans compensation de mouvement selon lesdites premières informations de mouvement (D) et selon des informations de modes de fonctionnement préalablement déterminées en fonction du contenu desdites images initiales, et en ce que cet étage de sous-échantillonnage et d'interpolation est inséré entre la sortie du circuit (340) de reconstruction et l'entrée d'un circuit de mémorisation (360).

8. Dispositif de décodage selon la revendication 6, caractérisé en ce que lesdits signaux représentatifs sont les signaux de chrominance d'une séquence d'images de télévision, en ce que ledit circuit de traitement est un circuit (450) de réinterpolation des signaux de différence de couleur de ces signaux de chrominance, et en ce qu'un interrupteur (480) d'élimination d'une image reconstruite sur deux est inséré entre la sortie du circuit de reconstruction (340) et l'entrée d'un circuit de mémorisation (360).

**Patentansprüche**

1.  Die vorliegende Erfindung betrifft eine Vorrichtung zum Codieren von Eingangssignalen, repräsentativ für sogenannte originale Bilder ($I_1$, $I_2$, $I_3$, $I_4$, $I_5$, ...), die in einer Sequenz angeordnet sind, in der sie nach ihrem in Indexen erscheinenden Rang oder ihrer Parität lokalisiert werden, wobei die besagte Vorrichtung folgendes enthält :

    (a) eine Codierstufe (20) variabler Länge;

    (b) eine abgeleitet an die Codierstufe angeschlossene Wiederherstellungsstufe (30), dafür vorgesehen, auf die an der Anschlußstelle vorhandenen Signale mit der besagten Codierstufe an dieser Anschlußstelle die entgegengesetzten der durch die besagte Codierstufe auf die Eingangssignale dieser Codierstufe bereits durchgeführten Vorgänge durchzuführen;

    (c) eine Bewertungsstufe der Bewegungen nach begrenzten Blöcken innerhalb der besagten Bilder;

    (d) eine Vorherbestimmungsstufe (40) nach den Ausgangssignalen der besagten Wiederherstellungs- und Bewegungsbewertungsstufe;

    die besagte Codierstufe weist folgende Merkmale auf :

    (A) die Stufe der Bewegungsbewertung (50) verfügt über Mittel zur Bestimmung einerseits von Eingangssignalen ($I_1$, $I_3$, $I_5$, $I_7$, ...) einer bestimmten Parität in der besagten, zur Übertragung bestimmten Sequenz und andererseits über sogenannte primäre Bewegungsinformationen (D), relativ zur Bewegung zwischen diesen Eingangssignalen und in der besagten Sequenz repräsentativ der zusätzlichen Eingangssignale ($I_2$, $I_4$, $I_6$, $I_8$, ...) entgegengesetzter Parität, die nicht zur Übertragung bestimmt sind und die sie ersetzen, der sogenannten zweiten, doch jetzt in der besagten Sequenz repräsentativen Bewegungsinformationen (D') der zwischen den aufeinanderfolgenden Eingangssignalen ($I_1$ und $I_3$; $I_3$ und $I_5$; $I_5$ und $I_7$, usw.) stattgefundenen Bewegung gleicher Parität, sogenannter jeweiliger nachträglicher ($I_3$, $I_5$, $I_7$, ...) und vorhergehender $I_1$, $I_3$, $I_5$,...) Eingangssignale, wobei diese zweiten Informationen (D') für die besagte Vorherbestimmungsstufe bestimmt sind;

    (B) die Vorherbestimmungsstufe wird von einer Auswahlstufe (100) der in der besagten Codierstufe zu codierenden Signale gefolgt, die einerseits von den Eingangssignalen der Vorrichtung und andererseits den Ausgangssignalen der besagten Vorherbestimmungsstufe herrühren;

    (C) die Wiederherstellungsstufe verfügt über einen zusätzlichen Verarbeitungskanal (31, 320, 33), wenn die Eingangssignale der Vorrichtung von zusätzlichen Informationen (M2) begleitet werden.

2.  Eine Codiervorrichtung laut Anspruch 1, mit dem Merkmal, daß die Stufe der Bewegungsbewertung über ein erstes Untersystem (51) zur Bestimmung eines Zwischenvektors ab den besagten ersten Bewegungsinformationen und ein zweites Untersystem (52) zur Wertkorrektur dieses Zwischenvektors verfügt, der die besagten zweiten Bewegungsinformationen (D') liefert.

3.  Eine Vorrichtung zum Codieren laut Anspruch 2, mit dem Merkmal, daß die besagten Untersysteme (51, 52) zur Bestimmung des Zwischenvektors und der zur Wertkorrektur jeweils über eine Serienschaltung der Adressierung (510, 520), Subtrahierung (511, 521), der Erhebung in die Quadratpotenz (512, 522), der Summenberechnung (513, 523) und des Vergleichs (514, 524) verfügen.

4.  Eine Vorrichtung zum Codieren laut Anspruch 1, mit dem Merkmal, daß :

    (A) die Eingangssignale der Auswahlstufe (210) über eine räumliche Filterstufe (205) geliefert werden;

    (B) die Bewertungsstufe (250) dafür vorgesehen ist, zweite Informationen (D') in bezug auf die Bewegung einerseits zwischen den Eingangssignalen bestimmter Parität und den Eingangssignalen entgegengesetzter Parität und andererseits zwischen den aufeinanderfolgenden Eingangssignalen bestimmter Parität zu liefern.

5.  Eine Vorrichtung zum Codieren laut Anspruch 4, mit dem Merkmal, daß die besagte Stufe zur Bewegungsbewertung (250) über ein Untersystem zur Vektorbestimmung verfügt, das wiederum über eine Serienschaltung der Adressierung (251) verfügt, die an einem ersten Eingang die besagten, zuvor verarbeiteten Signale und an einem zweiten Eingang die besagten ersten Bewegungsinformationen (D) über eine Subtraktionsschaltung (252), eine Schaltung zur Berechnung der Quadratpotenz (253), eine Summenschaltung (254) und eine Vergleichsschaltung (255) erhält, d.h. :

(a) zur Bestimmung der zweiten Informationen (D′) in bezug auf die Bewegung zwischen den Signalen bestimmter Parität und den darauffolgenden Signalen entgegengesetzter Parität erhält die Subtraktionschaltung (252) an ihrem zweiten Eingang, der nicht mit der Adressierungsschaltung (251) verbunden ist, Signale entgegengesetzter Parität;

(b) für die Bestimmung der zweiten Informationen (D′) in bezug auf die Bewegung zwischen den aufeinanderfolgenden Signalen bestimmter Parität geht dem zweiten Eingang der besagten Adressierungsschaltung ein serieller Verdopplungs-Multiplikator voraus, und die Subtraktionsschaltung erhält an ihrem zweiten, nicht mit der besagten Adressierungsschaltung verbundenen Eingang die Signale bestimmter Parität.

6. Eine Vorrichtung zum Decodieren der zuvor übertragenen und/oder gespeicherten Signale nach Verminderung des Flusses, die besagten Signale, repräsentativ für die sogenannten originalen Bilder ($I_1$, $I_2$, $I_3$, $I_4$, $I_5$,...), sind in einer Sequenz angeordnet, in der sie nach ihrem in Indexen erscheinenden Rang oder ihrer Parität lokalisiert werden und vor der Übertragung und/oder der Speicherung in einer Codiervorrichtung codiert wurden, die folgendes enthält :

(a) eine Codierstufe variabler Länge;

(b) eine parallel an die Codierstufe angeschlossene Wiederherstellungsstufe, dafür vorgesehen, auf die an der Anschlußstelle vorhandenen Signale mit der besagten Codierstufe die entgegengesetzten der an dieser Anschlußstelle durch die besagte Codierstufe auf die Eingangssignale dieser Codierstufe bereits durchgeführten Vorgänge durchzuführen;

(c) eine Bewertungsstufe der Bewegungen nach begrenzten Blöcken innerhalb der besagten Bilder, vorgesehen zur Bestimmung einerseits von Eingangssignalen ($I_1$, $I_3$, $I_5$, $I_7$, ...) einer bestimmten Parität in der besagten, zu übertragenden Sequenz und andererseits sogenannter primärer Bewegungsinformationen (D), relativ zur Bewegung zwischen diesen Eingangssignalen und in der besagten Signalsequenz repräsentativ für die zusätzlichen Eingangssignale ($I_2$, $I_4$, $I_6$, $I_8$, ...) entgegengesetzter Parität, die nicht zur Übertragung bestimmt sind und die sie ersetzen, sogenannte zweite Bewegungsinformationen (D′), und in der besagten Sequenz repräsentativ der stattgefundenen Bewegung zwischen aufeinanderfolgenden Eingangssignalen ($I_1$ und $I_3$; $I_3$ und $I_5$; $I_5$ und $I_7$, usw.) derselben, sogenannten bestimmten Parität, jeweils nachträgliche Eingangssignale ($I_3$, $I_5$, $I_7$, ...) und vorhergehende Eingangssignale ($I_1$, $I_3$, $I_5$ ...) bezeichnet, wobei die besagten zweiten Informationen (D′) für die besagte Vorherbestimmungsstufe bestimmt sind;

(d) eine Vorherbestimmungsstufe nach den Ausgangssignalen der besagten Wiederherstellungs- und der Bewegungsbestimmungstufen;

(e) eine Auswahlstufe ab einerseits den Eingangssignalen der Codiervorrichtung und andererseits ab den Ausgangssignalen der besagten Vorherbestimmungsstufe der zu codierenden Signale in der besagten Codierstufe; die besagte Codierstufe verfügt über eine Decodierstufe und diese über eine Reihe Pufferspeicher (310), eine Decodierschaltung (320) und eine Schaltung zur entgegengesetzten orthogonalen Quantifikation und Transformation (330) der decodierten Signale, die ebenfalls die zuvor übertragenen und/oder gespeicherten Signale C und N erhält und jeweils eine Klassifizierung der Blöcke nach ihrem Inhalt und eine Normalisationsinformation bildet, mit dem Merkmal daß sie zusätzlich über folgendes verfügt :

(1) eine Schaltung zur Wiederherstellung von Bildern (340) von Ausgangssignalen der besagten Schaltung zur entgegengesetzten orthogonalen Quantifikation und Transformation und von im Laufe des vorhergehenden Wiederherstellungszyklus bestimmter Vorherbestimmungsinformationen;

(2) eine Verarbeitungsschaltung zur Wiederherstellung von Bildern (350) nach einer der originalen Bildanordnung ähnlichen Disposition;

(3) eine Vorherbestimmungsschaltung (370), dazu bestimmt, die besagten Vorherbestimmungsinformationen einerseits von mit dem Inhalt der besagten wiederhergestellten Bilder verbundenen Informationen und andererseits von den besagten zweiten Bewegungsinformationen (D′) zu liefern.

7. Eine Vorrichtung zum Decodieren laut Anspruch 6, mit dem Merkmal, daß die besagten repräsentativen Signale Lichtsignale einer TV-Bildsequenz sind, daß die besagte Verarbeitungsschaltung (350) eine Stufe der Unterproben und der Interpolation mit oder ohne Bewegungskompensation nach den besagten ersten Bewegungsinformationen (D) und nach den Informationen der zuvor bestimmten Informationsmodi je nach dem Inhalt der besagten ursprünglichen Bilder ist, und daß diese Stufe für Unterproben und Interpolation zwischen dem Ausgang der Wiederherstellungsschaltung (340) und dem Eingang der Speicherschaltung (360) eingefügt ist.

8. Eine Vorrichtung zum Decodieren laut Anspruch 6, mit dem Merkmal, daß die besagten repräsentativen Signale Chrominanzsignale einer TV-Bildsequenz sind, daß die besagte Verarbeitungsschaltung eine Reinterpolationsschaltung (450) der Farbunterscheidungssignale dieser Chrominanzsignale ist, und, daß zwischen dem Ausgang der Wiederherstellungsschaltung (340) und dem Eingang der Speicherschaltung (360) ein Schalter (480) zur Beseitigung eines von zwei wiederhergestellten Bildern eingefügt ist.

## Claims

1. An arrangement for encoding input signals which are representative of original images ($I_1$, $I_2$, $I_3$, $I_4$, $I_5$, ...) grouped in a sequence in which they are marked by their row, or parity, and appearing in indices,

   (a) a variable length encoding stage (20);

   (b) a reconstruction stage (30) shunt-connected in the encoding stage and adapted to carry out on the signals present at its junction point with said encoding stage the inverse operations of those already carried out by said coding stage at said junction point on the input signals of said encoding stage;

   (c) a stage for estimating the motion per block bounded within said images;

   (d) a stage (40) for prediction based on the output signals of said reconstruction and motion estimation stages;

   said encoding arrangement being characterized in that:

   (A) the motion estimation stage (50) comprises meas for determining, on the basis of input signals ($I_1$, $I_3$, $I_5$, $I_7$,...), a given parity in said sequence, intended for transmission, and first motion information components (D) related to the motion between these input signals and representing the opposite parity in said complementary input signal sequence ($I_2$, $I_4$, $I_6$, $I_8$,...), not intended for transmission and for which they are substituted, and second motion information components (D'), this time representing the motion between successive input signals in said sequence ($I_1$ and $I_3$; $I_3$ and $I_5$; $I_5$ and $I_7$, etc., ...) of the same determined parity, referred to as subsequent input signals ($I_3$, $I_5$, $I_7$, ...) and prior input signals ($I_1$, $I_3$, $I_5$, ...), respectively, said second information components (D') being intended for said prediction stage;

   (B) the prediction stage is followed by a selection stage (100) for selecting signals to be encoded in said encoding stage from the input signals of the arrangement on the one hand and the output signals of said prediction stage on the other hand;

   (C) the reconstruction stage comprises a track (31, 320, 33) for additional processing when the input signals of the arrangement are accompanied by additional information components ($M_2$).

2. An encoding arrangement as claimed in Claim 1, characterized in that the motion estimation stage comprises a first sub-assembly (51) for determining an intermediate vector from said first motion information components, followed by a second sub-assembly (52) for correcting the value of said intermediate vector, supplying said second motion information components (D').

3. An encoding arrangement as claimed in Claim 2, characterized in that said sub-assemblies (51, 53) for determining the intermediate vector and for correcting said vector each comprise a series arrangement of an address circuit (510, 520), a subtracter (511, 521), a squarer (512, 522), a summing device (513, 523) and a comparator (514, 524).

4. An encoding arrangement as claimed in Claim 1, characterized in that

   (A) its input signals are applied to the selection stage (210) via a spatial filtering stage (205);

   (B) the estimation stage (250) is adapted to supply second information components (D') relating to the motion between the input signals of the determined parity and the subsequent input signals of the opposite parity, and between successive input signals of the determined parity.

5. An encoding arrangement as claimed in Claim 4, characterized in that said movement estimation stage (250) comprises a sub-assembly for determining the vector, which sub-assembly comprises in a series arrangement an address circuit (251) a first input of which receives said signals previously processed by the reconstruction stage and a second input of which receives said first movement information components (D), a subtracter (252), a squarer (253), a summing device (254) and a comparator (255), and in

EP 0 418 952 B1

that

(a) for determining the second information components (D′) relating to the movement between the signals of the determined parity and the subsequent signals of the opposite parity, the subtracter (252) receives said signals of the opposite parity at its second input which is not connected to the address circuit (251);

(b) for determining the second information components (D′) relating to the movement between successive signals of the determined parity, a multiply-by-two circuit precedes in series the second input of said address circuit and the subtracter receives the signals of the determined parity at its second input which is not connected to said address circuit.

6. An arrangement for decoding signals previously transmitted and/or stored after rate reduction, said signals, which are representative of original images ($I_1$, $I_2$, $I_3$, $I_4$, $I_5$, ...) grouped in a sequence in which they are marked by their row, or parity, and appearing in indices having been enclosed before transmission and/or storage in an encoding arrangement comprising:

(a) a variable length encoding stage;

(b) a reconstruction stage connected in parallel in the encoding stage and adapted to carry out on the signals present at its junction point with said encoding stage the inverse operations of those already carried out by said coding stage at said junction point on the input signals of said encoding stage;

(c) a stage for estimating the movement by means of limited blocks within said images, adapted to determine, on the basis of input signals ($I_1$, $I_3$, $I_5$, $I_7$,...), a given parity in said sequence, intended for transmission, and first motion information components (D) related to the motion between these input signals and representing the opposite parity in said complementary input signal sequence ($I_2$, $I_4$, $I_6$, $I_8$,...), not intended for transmission and for which they are substituted, and second motion information components (D′), this time representing the motion between successive input signals in said sequence ($I_1$ and $I_3$; $I_3$ and $I_5$; $I_5$ and $I_7$, etc., ...) of the same determined parity, referred to as subsequent input signals ($I_3$, $I_5$, $I_7$, ...) and prior input signals ($I_1$, $I_3$, $I_5$, ...), respectively, said second information components (D′) being intended for said prediction stage;

(d) a stage for prediction based on the output signals of said reconstruction and motion estimation stages;

(e) a stage for selecting from the input signals of the encoding arrangement on the one hand and from the output signals of said prediction stage on the other hand signals to be encoded in said encoding stage;

said decoding arrangement comprising a decoding stage which comprises a series arrangement of a buffer memory (310), a decoding circuit (320) and a circuit (330) for inverse quantization and orthogonal transform of decoded signals, receiving also signals C and N previously transmitted and/or stored and constituting classification information of blocks in accordance with their contents and normalization information, respectively, characterized in that the arrangement also comprises:

(1) a circuit (340) for reconstructing the images from output signals of said circuit for inverse orthogonal transform and quantization and from prediction information determined during a preceding reconstruction cycle:

(2) a processing circuit (350) for restoring images in accordance with a grouping similar to the grouping of the original images;

(3) a prediction circuit (370) for supplying said prediction information from information related to the contents of said reconstructed images and said second motion information components (D′).

7. A decoding arrangement as claimed in Claim 6, characterized in that said representative signals are the luminance signals of a series of television pictures, in that said processing circuit (350) is a sub-sampling and interpolation stage with or without compensation of movement in accordance with said first motion information components (D) and in accordance with information of modes of operation previously determined as a function of the contents of said initial images, and in that said sub-sampling and interpolation stage is arranged between the output of the reconstruction circuit (340) and the input of a memory circuit (360).

8. A decoding arrangement as claimed in Claim 6, characterized in that said representative signals are the chrominance signals of a series of television pictures, in that said processing circuit is a circuit (450) for reinterpolating the colour difference signals of said chrominance signals and in that a switch (480) for eliminating one out of two reconstructed images is arranged between the output of the reconstruction circuit (340) and the input of a memory circuit (360).

17

FIG. 1

FIG. 5

FIG. 2a

FIG. 2b

FIG. 2c

FIG. 3

FIG. 4

FIG. 6

FIG. 7

FIG. 8

FIG. 9

FIG. 10

FIG. 11